# EUROPEAN PATENT APPLICATION

(11) **EP 4 424 980 A1**
(43) Date of publication of application: **04.09.2024**
(21) Application number: 24160379.4
(22) Date of filing: 28.02.2024
(51) Int. Cl.: F02C 7/32, F16F 15/02, F16F 15/073, F01D 25/04, F16F 7/116

(54) **DYNAMIC ABSORBER FOR AIRCRAFT ENGINE ACCESSORIES**

(30) Priority: 28.02.2023 US 202318175725
(71) Applicant: PRATT & WHITNEY CANADA CORP., Longueuil, Québec J4G 1A1 (CA)
(72) Inventor: BRILLON, Louis, (01BE5) Longueuil, J4G 1A1 (CA)
(74) Representative: Dehns

(57) **Abstract**

An accessory gearbox (30) of an aircraft engine (10) includes an accessory gearbox cover (40) having an outer surface (42) with an accessory mount (44) disposed thereon. An accessory device (38) is mounted to the accessory gearbox cover (40) at the accessory mount (44). A dynamic absorber (56) is mounted to one or more of the accessory device (38) and the accessory gearbox cover (40). The dynamic absorber (56) is tuned to attenuate a vibration frequency of the one or more of the accessory device (38) and the accessory gearbox cover (40).

## Description

### TECHNICAL FIELD

The disclosure relates generally to aircraft engines and, more particularly, to accessory gearboxes of such engines.

### BACKGROUND

Aircraft engines often include accessory gearboxes (AGBs), which are used to drive various engine accessories, such a fuel pumps, oil pumps, generators, etc.. In certain instances, such engine accessories are mounted to a cover of the AGB. AGB covers are often thin, relatively light structures, on which a number of heavier masses (i.e., the accessories) are attached. AGB covers are therefore prone to dynamic vibrations and/or resonances during operation of the engine. In addition, certain accessories, such as generators, can induce additional vibrations in the AGB cover due to their own operating unbalances.

The frequencies generated by the vibrations and/or resonances can interfere with engine operating speeds and create structural concerns. However, weight and envelope constraints limit the changes that can be made to the AGB cover to shift the resonant frequencies.

### SUMMARY

In an aspect of the invention, there is provided an accessory gearbox of an aircraft engine, comprising an accessory gearbox cover mounted to the accessory gearbox, the accessory gearbox cover having an outer surface with an accessory mount disposed thereon, an accessory device mounted to the accessory gearbox cover at the accessory mount, and a dynamic absorber mounted to one or more of the accessory device and the accessory gearbox cover, the dynamic absorber tuned to attenuate a vibration frequency of the one or more of the accessory device and the accessory gearbox cover.

The following optional features may be applied individually, or in any combination, to any of the above aspects of the invention:
In an embodiment of the above, the dynamic absorber includes an elongate body extending between a first end and a second end, the first end coupled to the one or more of the accessory device and the accessory gearbox cover, and a mass disposed at a position along a length of the elongate body, wherein a magnitude of the mass and the position of the mass correspond with the vibration frequency of the one or more of the accessory device and the accessory gearbox cover.

In a further embodiment of any of the above, the mass is disposed in an elongated slot extending along a portion of the length of the elongate body, the mass positionable between a minimum distance and a maximum distance from the first end within the elongated slot.

In a further embodiment of any of the above, the dynamic absorber has a first resonant frequency corresponding to the vibration frequency of the one or more of the accessory device and the accessory gearbox cover.

In a further embodiment of any of the above, a plurality of dynamic absorbers are mounted to the accessory device and tuned to attenuate a plurality of frequencies of the accessory device.

In a further embodiment of any of the above, the dynamic absorber is tuned to attenuate a plurality of different frequencies.

In a further embodiment of any of the above, the dynamic absorber is mounted to the accessory device and is secured to a furthest axial position on the accessory device from the accessory gearbox cover relative to an axis extending normally from the accessory gearbox cover.

In a further embodiment of any of the above, an additional accessory device is mounted to the accessory gearbox cover at an additional accessory mount, wherein the dynamic absorber is mounted to a heaviest of the accessory device and the additional accessory device.

In a further embodiment of any of the above, the dynamic absorber includes a flexible spring extending from a first end to a second end, the first end coupled to the one or more of the accessory device and the accessory gearbox cover, and a mass disposed at the second end.

In another aspect of the invention, there is provided an aircraft engine, comprising a main shaft extending through a core of the aircraft engine, a tower shaft drivingly engaged to the main shaft at a first end of the tower shaft, and an accessory gearbox disposed outside of the core of the aircraft engine, the accessory gearbox drivingly engaged to the tower shaft at a second end of the tower shaft, the accessory gearbox comprising an accessory gearbox cover mounted to the accessory gearbox, the accessory gearbox cover having an outer surface with an accessory mount disposed thereon, an accessory device mounted to the accessory gearbox at the accessory mount, and a dynamic absorber mounted to one or more of the accessory device and the accessory gearbox cover, the dynamic absorber tuned to attenuate a vibration frequency of the one or more of the accessory device and the accessory gearbox cover.

The following optional features may be applied individually, or in any combination, to any of the above aspects of the invention:
In an embodiment of the above, the dynamic absorber includes an elongate body extending between a first end and a second end, the first end coupled to the one or more of the accessory device and the accessory gearbox cover, and a mass disposed at a position along a length of the elongate body, wherein a magnitude of the mass and the position of the mass correspond with the vibration frequency of the one or more of the accessory device and the accessory gearbox cover.

In a further embodiment of any of the above, the mass is disposed in an elongated slot extending along a portion of the length of the elongate body, the mass positionable between a minimum distance and a maximum distance from the first end within the elongated slot.

In a further embodiment of any of the above, the dynamic absorber has a first resonant frequency corresponding to the vibration frequency of the one or more of the accessory device and the accessory gearbox cover.

In a further embodiment of any of the above, a plurality of dynamic absorbers are mounted to the accessory device and tuned to attenuate a plurality of frequencies of the accessory device.

In a further embodiment of any of the above, the dynamic absorber is tuned to attenuate a plurality of different frequencies.

In a further embodiment of any of the above, the dynamic absorber is mounted to the accessory device and is secured to a furthest axial position on the accessory device from the accessory gearbox cover relative to an axis extending normally from the accessory gearbox cover.

In a further embodiment of any of the above, an additional accessory device is mounted to the accessory gearbox cover at an additional accessory mount, wherein the dynamic absorber is mounted to a heaviest of the accessory device and the additional accessory device.

In a further embodiment of any of the above, the dynamic absorber includes a flexible spring extending from a first end to a second end, the first end coupled to the one or more of the accessory device and the accessory gearbox cover, and a mass disposed at the second end.

In a further aspect of the invention, there is provided a method for dampening an accessory gearbox of an aircraft engine, comprising securing an accessory device to a cover of the accessory gearbox at an accessory mount disposed on an outer surface of the cover, securing a dynamic absorber to one or more of the accessory device and the cover of the accessory gearbox; and tuning the dynamic absorber to attenuate a vibration frequency of the one or more of the accessory device and the cover of the accessory gearbox.

In an embodiment of the above, tuning the dynamic absorber includes positioning a mass having a predetermined magnitude at a predetermined distance from an attachment point between the dynamic absorber and the one or more of the accessory device and the cover of the accessory gearbox, the predetermined magnitude and the predetermined distance corresponding to the vibration frequency of the one or more of the accessory device and the cover of the accessory gearbox.

### BRIEF DESCRIPTION OF THE DRAWINGS

Reference is now made to the accompanying figures in which:
FIG. 1 is a schematic cross sectional view of a gas turbine engine;
FIG. 2 is a perspective view of an accessory gearbox cover, according to an embodiment;
FIG. 3 is a perspective view of a dynamic absorber, according to an embodiment; and
FIG. 4 is a schematic view of a dynamic absorber, according to another embodiment.

### DETAILED DESCRIPTION

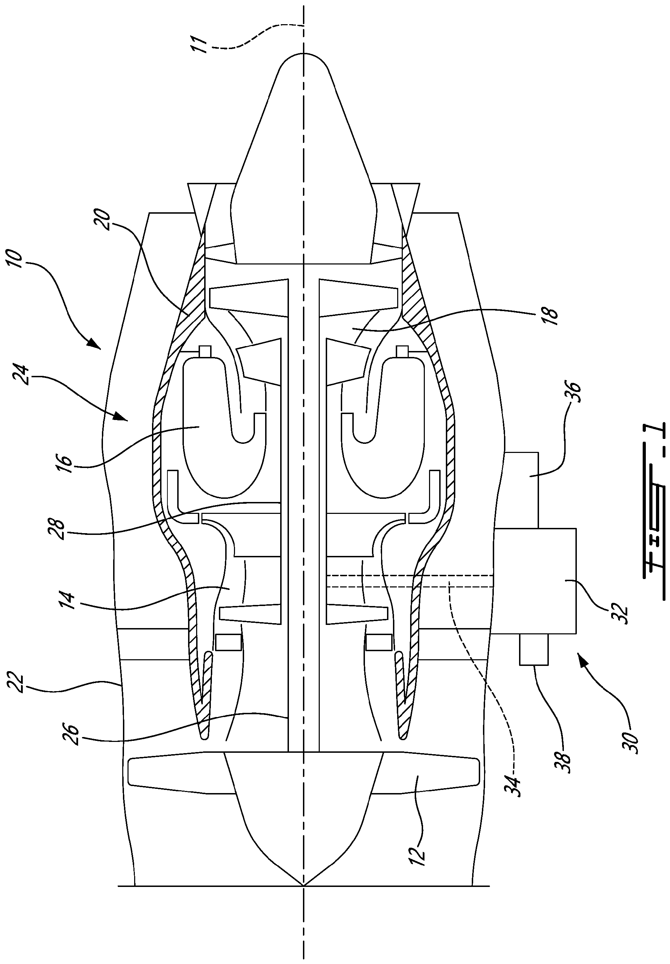

FIG. 1 illustrates an exemplary aircraft engine 10 (hereinafter, simply "engine" 10), such as a gas turbine engine for example, of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. A core casing 20 surrounds the compressor section 14, combustor 16, and turbine section 18. A housing or nacelle 22 surrounds the core casing 20 and defines an annular bypass passage 24 therebetween. A low pressure compressor of the compressor section 14 and a low pressure turbine of the turbine section 18 define a low pressure spool assembly 26. A high pressure compressor of the compressor section 14 and a high pressure turbine of the turbine section 18 define a high pressure spool assembly 28. While FIG. 1 illustratively depicts engine 10 to be a multi-spool, turbofan-type engine, the present disclosure is also applicable to other engine types, such as turboprop or turboshaft engines, having one or more spools. The present disclosure may also apply to other types of engines, such as hybrid-electric engines.

The engine 10 further includes an accessory drive gearbox 30 (also referred to as an accessory gearbox, or simply "AGB") which includes generally a housing 32 secured to a mounting face on either the nacelle 22 or the core casing 20. In the depicted embodiment of Fig. 1, the AGB 30 is mounted to the nacelle 22 and a tower shaft 34 is operatively connected (i.e., drivingly engaged) at one end thereof to one of the main shafts, for example a shaft of the high pressure spool assembly 28, and is operatively connected (i.e., drivingly engaged) at the other end thereof to the accessory drive gearbox 30, such as to drive the AGB. Illustratively, the tower shaft 34 and the accessory drive gearbox 30 form a mechanical drive system for transferring engine power to drive one or more accessories of the engine 10. Such accessories may include, for example, an integrated starter generator 36 and one or more other accessory devices indicated schematically at 38 in FIG. 1, such as a fuel pump, a hydraulic pump, etc.

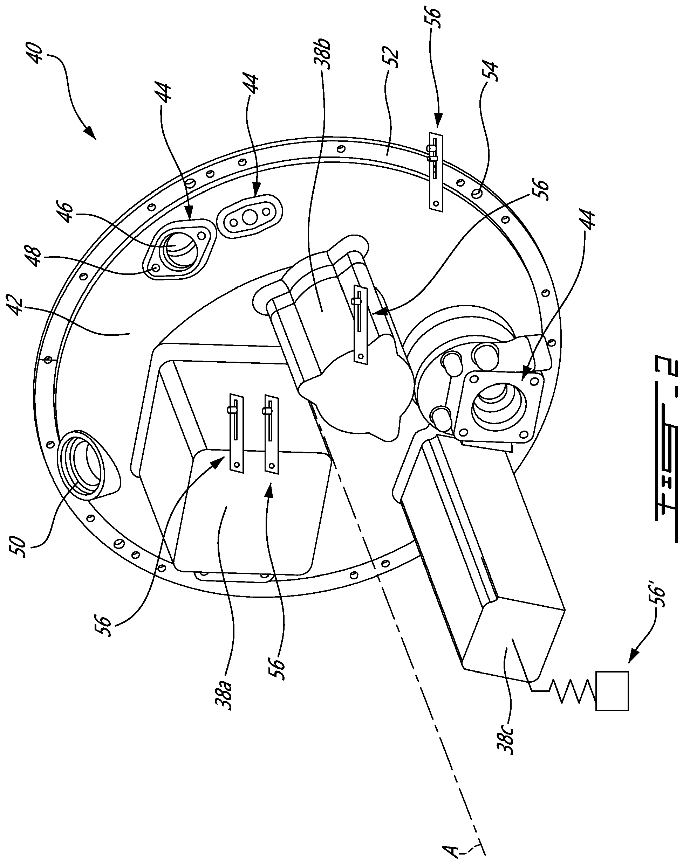

In certain embodiments, the housing 32 of the AGB 30 includes a cover (e.g., cover 40 illustrated in FIG. 2) to which one or more accessory devices (e.g., accessory device(s) 38 illustrated in FIG. 2), also referred to as accessories, are mounted. As illustrated in FIG. 2, a first accessory device 38a, a second accessory device 38b, and a third accessory device 38c (collectively referred to as accessory device(s) 38) are mounted to the cover 40. In other examples, a greater or lesser number of accessory device(s) 38 may be mounted to the cover 40. In particular, the cover 40 includes an inner surface and an outer surface 42. The outer surface 42 includes one or more accessory mounts 44 to which the accessory device(s) 38 are mounted. The accessory mounts 44 are spaced apart on the outer surface 42 of the cover 40, as required for the respective accessory device(s) 38 mounted thereto. As such, a first mount of the accessory mounts 44 will thus be spaced apart from an additional mount (i.e., a second mount) of the accessory mounts 44, for example. Apertures 46 may pass through the accessory mounts 44 and/or the cover 40 for one or more shafts (not shown) of the accessory device(s) 38 to pass through as well, as well as fastener holes 48 to secure the accessory device(s) 38 to the cover 40. Each accessory device 38a, 38b, and 38c may thus be provided with suitable mounting hardware. The cover 40 includes other connectors 50, for instance for the attachment of fluid tubes. As shown in FIG. 2, the connectors 50 may or may not be threaded. The shown cover 40 has a flat and thin structure with a flange 52 along an outer circumference thereof. Other shapes for the cover 40 may be contemplated. The flange 52 illustratively includes fastener holes 54 disposed therethrough along its circumference for attaching the cover 40 to the housing 32 via fasteners (not shown).

As the accessory device(s) 38 are removably mountable to the cover 40, they may be removed and replaced, for instance for servicing. The accessory device(s) 38 may be referred to as overhung masses, as their relative weight compared to the cover 40 to which they are attached may render them prone to dynamic vibrations and/or resonances. In addition, the accessory device(s) 38 may include a generator, which may induce additional vibrations due to its own operating imbalances. Such vibrations may interfere with engine operations and create potential structural concerns, for instance excessive loading on engine components due to high vibration responses.

In accordance with the present technology, therefore, the accessory device(s) 38 and/or the AGB cover 40 are provided with one or more dynamic absorbers 56 mounted thereto to provide a dampening effect. The one or more dynamic absorbers 56 are tuned to attenuate one or more specific vibration frequencies of the accessory device(s) 38 and/or the AGB cover 40 and thus may improve the dynamic characteristics of the AGB cover 40. Stated differently, the one or more dynamic absorbers 56 are operable to match out the phase of an already present resonance, i.e., of the vibrating accessory device(s) 38 and/or the AGB cover 40, and counteract its/their natural movement by opposing its/their frequency, i.e., by vibrating at a 180 degree phase shift from the resonant frequency. Various numbers and types of dynamic absorbers may be contemplated, as will be discussed in further detail below. In the embodiment shown in FIG. 2, the first accessory device 38a has two dynamic absorbers 56 mounted thereto, each of the second accessory device 38b and the AGB cover 40 have a dynamic absorber 56 mounted thereto, and the third accessory device 38c has another, alternate embodiment of a dynamic absorber 56' mounted thereto. Other configurations may be contemplated, as the number, type and position of dynamic absorbers 56, 56' may vary based on the number, size, weight and locations of the various accessory devices 38 and the vibration frequencies to be avoided.

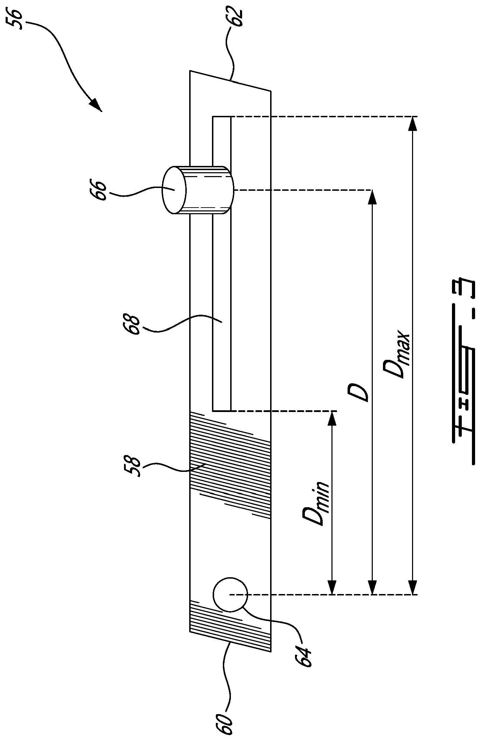

Referring additionally to FIG. 3, the depicted dynamic absorber 56 has an elongate body 58, illustratively a blade-shaped structure, extending from a first end 60 to a second end 62. The second end 62 has attachment means 64, illustratively a fastener hole 64, for securing or operatively coupling the first end 60 to an accessory device 38 or to the AGB cover. As such, in the shown embodiment, but not necessarily the case in all embodiments, the dynamic absorbers 56 are removably mounted to the accessory device(s) 38 and/or the AGB cover. While not depicted in FIG. 2, each accessory device 38 and/or the AGB cover 40 is provided with corresponding mounting means to connect to the first end 60. As will be discussed in further detail below, the dynamic absorbers 56 may be secured to various locations on the accessory device(s) 38, for instance closer to or further from the outer surface 42 of the AGB cover 40 relative to a cover axis A extending through a center (illustrated in FIG. 2) of the AGB cover 40 in a direction substantially normal thereto. The depicted dynamic absorber 56 may have a first resonant frequency corresponding to a frequency of interest (i.e., the frequency to be attenuated).

Still referring to FIG. 3, the depicted dynamic absorber 56 further includes a mass 66 disposed in an elongated slot 68 at a position along the elongate body 58, illustratively at a distance D from the attachment means 64. The magnitude of mass 66, as well as the distance D correspond with the frequency of the accessory device(s) 38 and/or the AGB cover 40 to be attenuated, and thus may be selected or adjusted in order to tune the dynamic absorber 56. The elongated slot 68 may provide a range of distances D between which the mass 66 may be disposed, illustratively a minimum distance Dₘᵢₙ and a maximum distance Dₘₐₓ. Each distance D may correspond with a different frequency to be attenuated by the dynamic absorber 56. In other embodiments, the elongated slot 68 may be omitted, and the mass 66 may be disposed, for instance fastened to or integrated with, the elongate body 58 at a predetermined distance from the attachment means 64 corresponding to a desired frequency.

The dynamic absorber 56 depicted in FIG. 3 includes a mass 66 disposed at a distance D from the attachment means 64, and may thus be operable to attenuate a specific frequency, i.e., by vibrating along a particular direction. In some embodiments, for instance the case of the first accessory device 38a depicted in FIG. 2, a plurality of dynamic absorbers 56 may be mounted to a single accessory device 38 to attenuate multiple problematic frequencies. The dynamic absorbers 56 may be mounted to the single accessory device 38, illustratively first accessory device 38a, at different mounting locations, be oriented in different directions, and/or have masses 66 of different magnitudes and/or positions to address different frequencies. In other embodiments, for instance in the case of the dynamic absorber 56 mounted directly to the outer surface 42 of the AGB cover 40, the dynamic absorber 56 may include a plurality of masses 66, illustratively two masses 66, disposed at different positions and/or having different magnitudes so that a single dynamic absorber 56 may attenuate a plurality of problematic frequencies. Various combinations of the above may be contemplated, for instance multiple dynamic absorbers 56 mounted directly to the AGB cover 40.

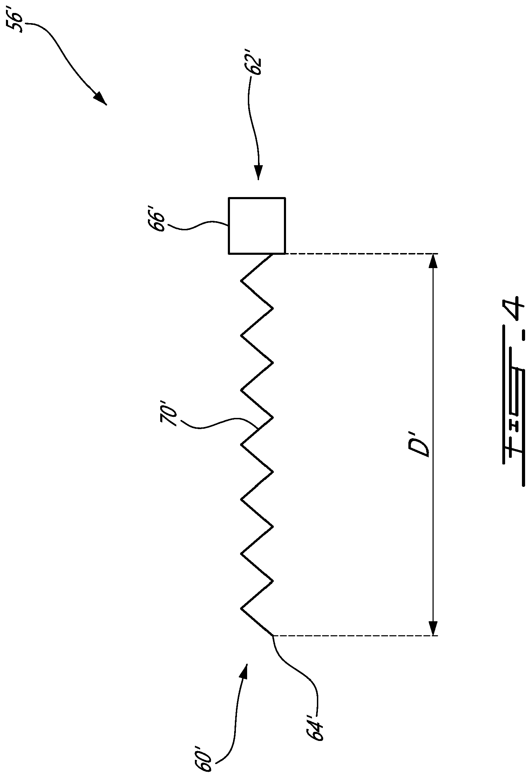

Referring to FIG. 4, another embodiment of a dynamic absorber 56' is shown. In this case, the dynamic absorber has a flexible spring 70' extending from a first end 60' to a second end 62'. Attachment means 64' are provided at the first end 60' for securing the dynamic absorber 56' to the accessory device(s) 38 and/or the AGB cover 40. A mass 66' is secured at the second end 62' of the spring 70'. The dynamic absorber 56' is thus operable to attenuate a problematic frequency of the accessory device(s) 38 and/or the AGB cover 40 by way of the mass 66' displacing in a reciprocating fashion as the spring 70' compresses and decompresses. In this embodiment, the dynamic absorber 56' may be tuned by varying the magnitude of the mass 66', by varying its position relative to the first end 60', and/or by varying the stiffness of the spring. In the shown case, the position of the mass 66' is represented by the free length D' of the spring 70'. As such, a spring 70' may be selected with a specific stiffness and free length D' based on the problematic frequency to be attenuated. In the embodiment depicted in FIG. 2, a single dynamic absorber 56' is mounted to the third accessory device 38c. Other numbers and locations for the dynamic absorber 56' may be contemplated as well.

As discussed above, the one or more dynamic absorbers 56 may be tuned to attenuate specific frequencies of the accessory device(s) 38 and/or the AGB cover 40. Stated differently, the vibrations of the coupled accessory devices 38 due to normal engine operations may be lessened due to the frequency attenuation compared to their vibrations if not for the one or more dynamic absorbers 56, 56'. The one or more dynamic absorbers 56, 56' may be tuned to have a natural vibration frequency that matches, is close to, or has a vibrating phase designed to match or be close to that of the main system on which it is installed (i.e., the AGB cover 40 and the accessory devices 38 mounted thereon). This arrangement may lead to all the excitation energy being consumed by the one or more dynamic absorbers 56, 56' rather than affecting the main system, thereby protecting the main system from excessive vibrations and structural concerns. The one or more dynamic absorbers 56, 56' may thus be tuned, for instance via the magnitude and position of their masses 66, to attenuate or avoid particular frequencies in order to reduce a load on the AGB cover 40, for instance to avoid specific engine operating frequencies that may have harmful results. By reducing the load on the engine cover 40, the AGB 30 may experience smoother operating conditions and an increase in life expectancy.

As discussed above, the number of dynamic absorbers 56, 56', type of dynamic absorbers 56, as well as particular characteristics of the dynamic absorbers (e.g., position and magnitude of the mass 66) may vary, for instance based on the number, weight and size of the various accessory devices 38 and the assembly's various response needs. In some cases, one or more dynamic absorbers 56, 56' may be positioned at a furthest axial position along the accessory devices 38 from the cover 40 relative to the cover axis A. Other mounting locations for the dynamic absorber 56, 56' may be contemplated. In some cases, only a heaviest or largest of the accessory devices 38 may have a dynamic absorber 56, 56'. In other cases, the two heaviest or largest accessory devices may have dynamic absorbers 56, 56' mounted thereto. Other mounting schemes for the dynamic absorbers 56, 56' may be contemplated.

According to the present disclosure, there is taught a method for dampening an accessory gearbox 30 of an aircraft engine 10. An accessory device 38 is secured to a cover 40 of the accessory gearbox 30 at an accessory mount 44 disposed on an outer surface 42 of the cover 40. At least one dynamic absorber 56 is secured to one or more of the accessory device 38 and the accessory gearbox cover 40. The at least one dynamic absorber 56 is tuned to attenuate a vibration frequency of the one or more of the accessory device 38 and the accessory gearbox cover 40. In some cases, tuning the at least one dynamic absorber 56 includes positioning a mass 66 having a predetermined magnitude at a predetermined distance D from an attachment point 64 between the at least one dynamic absorber 56 and the one or more of the accessory device 38 and the accessory gearbox cover 40, the predetermined magnitude and the predetermined distance D corresponding to the vibration frequency of the one or more of the accessory device 38 and the accessory gearbox cover 40.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. An accessory gearbox of an aircraft engine, comprising:
an accessory gearbox cover (40) having an outer surface (42) with an accessory mount (44) disposed thereon;
an accessory device (38) mounted to the accessory gearbox cover (40) at the accessory mount (44); and
a dynamic absorber (56) mounted to the accessory device (38) and/or the accessory gearbox cover (40), the dynamic absorber (56) tuned to attenuate a vibration frequency of the accessory device (38) and/or the accessory gearbox cover (40).

2. The accessory gearbox as defined in claim 1, wherein the dynamic absorber (56) comprises:
an elongate body (58) extending between a first end (60) and a second end (62), the first end (60) coupled to the accessory device (38) and/or the accessory gearbox cover (40); and
a mass (66) disposed at a position along a length of the elongate body (58), wherein a magnitude of the mass (66) and the position of the mass (66) correspond with the vibration frequency of the accessory device (38) and/or the accessory gearbox cover (40).

3. The accessory gearbox as defined in claim 2, wherein the mass (66) is disposed in an elongated slot extending along a portion of the length of the elongate body (58), the mass (66) positionable between a minimum distance and a maximum distance from the first end (60) within the elongated slot.

4. The accessory gearbox as defined in any preceding claim, wherein the dynamic absorber (56) has a first resonant frequency corresponding to the vibration frequency of the accessory device (38) and/or the accessory gearbox cover (40).

5. The accessory gearbox as defined in any preceding claim, further comprising a plurality of dynamic absorbers (56) mounted to the accessory device (38) and tuned to attenuate a plurality of frequencies of the accessory device (38).

6. The accessory gearbox as defined in any preceding claim, wherein the dynamic absorber (56) is tuned to attenuate a plurality of different frequencies.

7. The accessory gearbox as defined in any preceding claim, wherein the dynamic absorber (56) is mounted to the accessory device (38) and is secured to a furthest axial position on the accessory device (38) from the accessory gearbox cover (40) relative to an axis (A) extending normally from the accessory gearbox cover (40).

8. The accessory gearbox as defined in any preceding claim, further comprising an additional accessory device (38) mounted to the accessory gearbox cover (40) at an additional accessory mount (44), wherein the dynamic absorber (56) is mounted to a heaviest of the accessory device (38) and the additional accessory device (38).

9. The accessory gearbox as defined in any preceding claim, wherein the dynamic absorber (56) comprises a flexible spring (70') extending from a first end (60) to a second end (62), the first end (60) coupled to the accessory device (38) and/or the accessory gearbox cover (40), and a mass (66) disposed at the second end (62).

10. An aircraft engine, comprising:
a main shaft extending through a core of the aircraft engine (10);
a tower shaft (34) drivingly engaged to the main shaft at a first end (60) of the tower shaft (34); and
the accessory gearbox (30) as defined in any preceding claim, the accessory gearbox (30) being disposed outside of the core of the aircraft engine (10), the accessory gearbox (30) drivingly engaged to the tower shaft (34) at a second end (62) of the tower shaft (34).

11. A method for dampening an accessory gearbox of an aircraft engine, comprising:
securing an accessory device (38) to a cover (40) of the accessory gearbox (30) at an accessory mount (44) disposed on an outer surface (42) of the cover (40);
securing a dynamic absorber (56) to the accessory device (38) and/or the cover (40) of the accessory gearbox (30); and
tuning the dynamic absorber (56) to attenuate a vibration frequency of the accessory device (38) and/or the cover (40) of the accessory gearbox (30).

12. The method as defined in claim 11, wherein tuning the dynamic absorber (56) includes positioning a mass (66) having a predetermined magnitude at a predetermined distance from an attachment point (64) between the dynamic absorber (56) and the accessory device (38) and/or the cover (40) of the accessory gearbox (30), the predetermined magnitude and the predetermined distance corresponding to the vibration frequency of the accessory device (38) and/or the cover (40) of the accessory gearbox (30).
